# EUROPÄISCHE PATENTANMELDUNG

(11) **EP 0 594 990 A1**
(43) Veröffentlichungstag der Anmeldung: **04.05.1994**
(21) Anmeldenummer: 93114365.5
(22) Anmeldetag: 08.09.1993
(51) Int. Cl.: H02B 1/50

(54) **Kabelverzweigerschrank**

(30) Priorität: 24.10.1992 DE 9214423 U
(71) Anmelder: STEWING KUNSTSTOFFBETRIEB GmbH, D-46282 Dorsten (DE)
(72) Erfinder: Stewing, Albert, D-46282 Dorsten (DE)
(74) Vertreter: Honke, Manfred, Dr.-Ing.

(57) **Zusammenfassung**

Es handelt sich um ein Kabelverzweigergehäuse (1) mit einer Bodenplatte (3) und einem Sockel (2). Im Übergangsbereich von Kabelverzweigergehäuse (1) und Sockel (2) ist ein Auflagerflansch (5) für die Bodenplatte (3) vorgesehen. Zumindest im Bereich der Schrankvorderseite ist ein Niederhalteflansch (6a) für die Bodenplatte (3) unter Bildung einer Einschubnut (7a) mit dem Auflagerflansch (5) vorgesehen. Der Auflagerflansch (5) und der Niederhalteflansch (6a) sind an der Schrankvorderseite von einer lösbar befestigten Profilleiste (8) gebildet.

## Beschreibung

Die Erfindung betrifft einen Kabelverzweigerschrank, mit einem Kabelverzweigergehäuse und einem an dem Kabelverzweigergehäuse angeformten Sockel und einer zwischen dem Kabelverzweigergehäuse und dem Sockel angeordneten Bodenplatte. Soweit es sich bei dem Sockel aus einem geteilten Sockel aus Sockeloberteil und Sockelunterteil handelt, ist das Sockeloberteil an dem Kabelverzweigergehäuse angeformt. Die Bodenplatte ist zur Montage eines Rangiergestells für Verzweigereinrichtungen eingerichtet.

Kabelverzweigerschränke sind in verschiedenen Ausführungsformen bekannt. Insbesondere sind solche bekannt, bei denen das Rangiergestell als Verbindungsmittel zwischen Bodenplatte bzw. Sockel und Kabelverzweigergehäuse herangezogen wird. Häufig ist das Kabelverzweigergehäuse mit dem Rangiergestell und die Bodenplatte mit dem Sockel verschraubt. Bei derartigen Ausführungsformen ist die Montage von Bodenplatte und Rangiergestell verhältnismäßig aufwendig. Aus diesem Grunde ist bereits eine Bodenplatte mit seitlichen Montagewangen für das an den Montagewangen zu befestigende Kabelverzweigergehäuse entwickelt worden. Diese Ausführungsform ist jedoch für solche Kabelverzweigerschränke kaum geeignet, bei denen der Sockel bzw. das Sockeloberteil an dem Kabelverzweigergehäuse angeformt ist. - Hier setzt die Erfindung ein.

Der Erfindung liegt die Aufgabe zugrunde, einen Kabelverzweigerschrank der eingangs beschriebenen Ausführungsform zu schaffen, bei welchem die Montage von Bodenplatte und Rangiergestell erheblich vereinfacht wird.

Zur Lösung dieser Aufgabe ist der gattungsgemäße Kabelverzweigerschrank dadurch gekennzeichnet, daß im Übergangsbereich von Kabelverzweigergehäuse und Sockel ein Auflagerflansch für die Bodenplatte vorgesehen ist, daß zumindest im Bereich der Schrankrückseite und/oder Schrankvorderseite ein Niederhalteflansch für die Bodenplatte unter Bildung einer Einschubnut mit dem Auflagerflansch vorgesehen ist, und daß der Auflagerflansch und der Niederhalteflansch an der Schrankvorderseite von einer lösbar befestigten Profilleiste gebildet sind. - Diese Maßnahmen der Erfindung haben zur Folge, daß die Montage der Bodenplatte und folglich auch des Rangiergestells erheblich erleichtert wird, weil dazu - bei entfernter Profilleiste - die bereits mit dem Rangiergestell bestückte Bodenplatte lediglich in den Übergangsbereich zwischen Kabelgehäuse und Sockel eingeschoben werden muß. Dort liegt die Bodenplatte einerseits einwandfrei auf dem umlaufenden Auflagerflansch auf, ist die Bodenplatte andererseits in der Einschubnut und folglich zwischen Niederhalteflansch und Auflagerflansch einwandfrei gehalten. Die Fixierung in dieser Funktionsstellung erfolgt mit Hilfe der vorschraubbaren Profilleiste.

Weitere erfindungswesentliche Merkmale sind im folgenden aufgeführt. So können der Auflagerflansch und der Niederhalteflansch im Bereich der Schrankrückseite und der Schrankseitenwände an das Kabelverzweigergehäuse bzw. den Sockel angeformt sein, sind also Bestandteil von Kabelverzweigergehäuse bzw. Sockel. Im Bereich der Schrankseitenwände ist der Niederhalteflansch allerdings nicht zwingend erforderlich und kann dort gegebenenfalls fortfallen. Ferner schlägt die Erfindung vor, daß die Profilleiste mit dem Auflagerflansch und dem Niederhalteflansch für die Schrankvorderseite ein L-förmiges Oberteil als untere Abschlußleiste für eine vorderseitig in dem Kabelverzweigergehäuse hochschiebbare Frontplatte aufweist, welche die herkömmliche Schranktür ersetzt. In diesem Zusammenhang ist von erfinderischer Bedeutung, daß der horizontale L-Schenkel des L-förmigen Oberteils zugleich den Niederhalteflansch für die Bodenplatte bildet. Nach einem Vorschlag der Erfindung, dem selbständige Bedeutung zukommt, ist vorgesehen, daß die Profilleiste mit dem L-förmigen Oberteil als Bestandteil eines am Sockel lösbar befestigten Montagerahmens für eine vorderseitig in den Sockel eingesetzte Verschlußplatte ausgebildet ist und gleichsam den oberen Rahmenschenkel bildet. Die Verschlußplatte dient zum Abdecken einer Montageöffnung in dem Sockel bzw. Sockeloberteil. - Um eine einwandfreie Dichtwirkung zwischen Sockelbereich und Gehäusebereich zu erreichen, empfiehlt die Erfindung, daß die Bodenplatte ein umlaufendes Dichtungsprofil, z. B. Rundprofil aus Vollmaterial oder Schlauchprofil aufweist. Die Bodenplatte ist regelmäßig als längsgeteilte Platte ausgebildet. In diesem Zusammenhang kann zumindest das der Schrankrückseite zugeordnete Bodenplattenteil randseitig angeformte Paßstücke zum Einschieben in die zugeordnete Einschubnut aufweisen, deren Nutbreite aus fertigungstechnischen Gründen im Bereich der Schrankrückseite und gegebenenfalls der Schrankseitenwände regelmäßig deutlich größer als die Plattendicke ausgeführt ist. Die Paßstücke sorgen folglich für einen spielarmen Einsatz der Bodenplatte in die rückseitige Einschubnut. Im übrigen weist die Bodenplatte im allgemeinen einen umlaufenden Kragen auf. In diesem Zusammenhang lehrt die Erfindung, daß der Kragen zwischen zumindest den Niederhalteflanschen auf der Schrankvorderseite und der Schrankrückseite eingepaßt ist, diese Flansche also gleichsam einen Anschlag für den Kragen und folglich für die Bodenplatte bilden.

Die durch die Erfindung erreichten Vorteile sind im wesentlichen darin zu sehen, daß ein Kabelverzweigerschrank mit einem Kabelverzweigergehäuse und einem angeformten Sockel bzw. Sockeloberteil verwirklicht wird, bei welchem die Montage der Bodenplatte und des Rangiergestells für Verzweigereinrichtungen in erheblichem Maße vereinfacht worden ist.

Im folgenden wird die Erfindung anhand einer lediglich ein Ausführungsbeispiel darstellenden Zeichnung näher erläutert. Es zeigen:

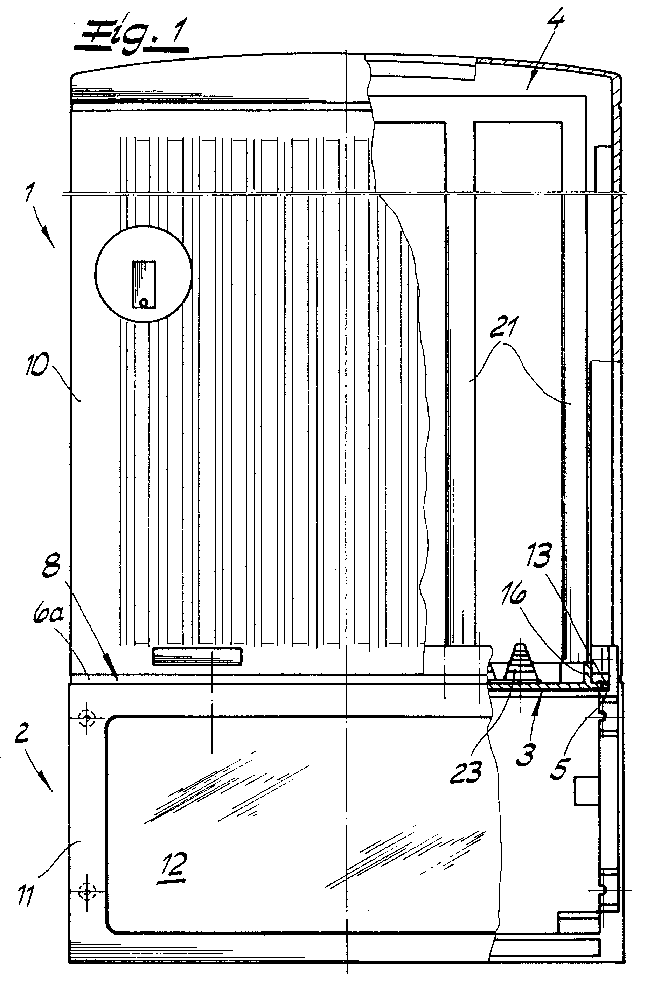

- Fig. 1: einen erfindungsgemäßen Kabelverzweigerschrank in schematischer Frontansicht, teilweise mit fortgebrochenem Frontteil und im Vertikalschnitt,

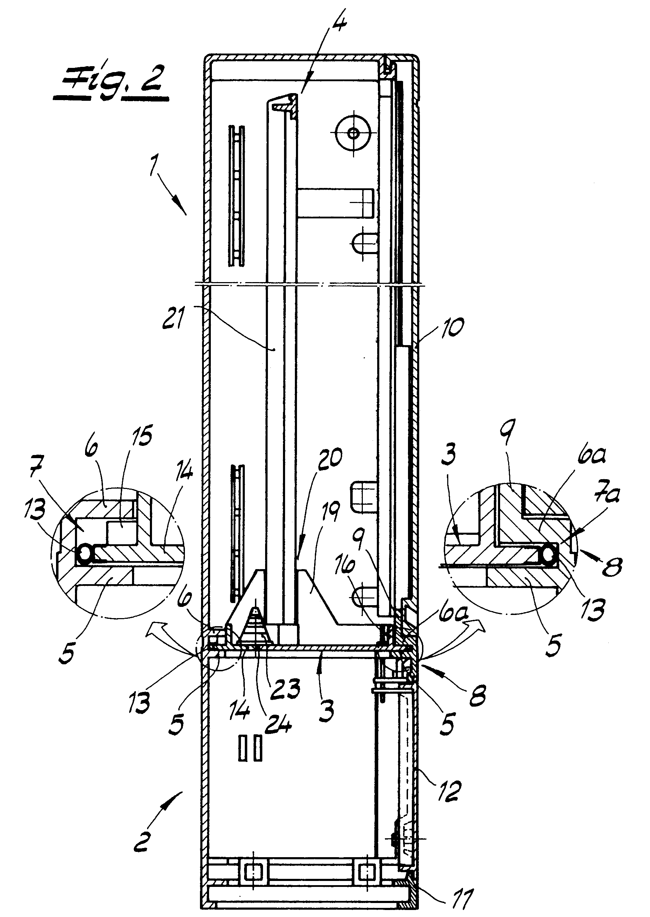

- Fig. 2: den Gegenstand nach Fig. 1 in Seitenansicht und Vertikalschnitt,

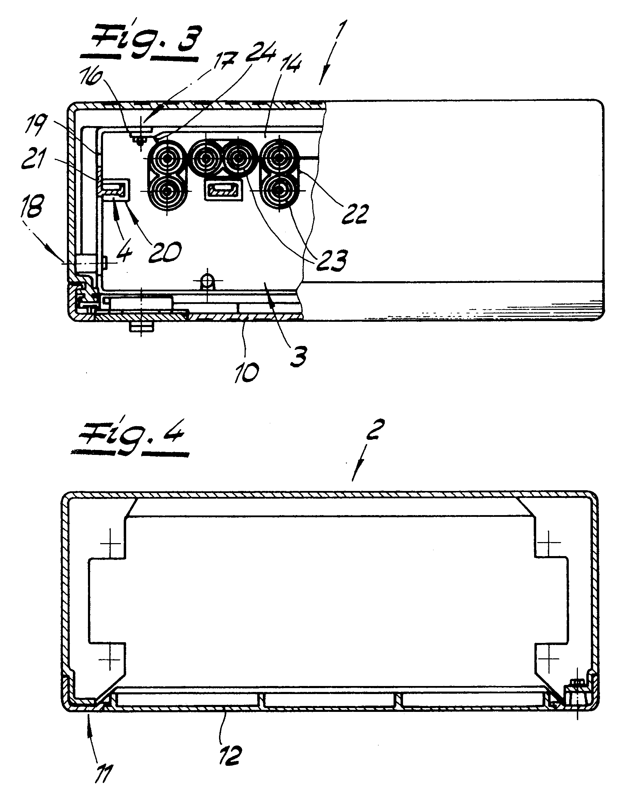

- Fig. 3: einen teilweisen Horizontalschnitt durch den Gegenstand nach Fig. 1 im Bereich des Kabelverzweigergehäuses und
- Fig. 4: einen teilweisen Horizontalschnitt durch den Gegenstand nach Fig. 1 im Bereich des Sockels.

In den Figuren ist ein Kabelverzweigerschrank mit einem Kabelverzweigergehäuse 1 und einem an dem Kabelverzweigergehäuse 1 angeformten Sockel 2 bzw. Sockeloberteil dargestellt. Zwischen dem Kabelverzweigerhäuse 1 und dem Sockel 2 ist eine Bodenplatte 3 angeordnet, die zur Montage eines Rangiergestells 4 eingerichtet ist. Im Übergangsbereich von Kabelverzweigergehäuse 1 und Sockel 2 ist ein umlaufender Auflagerflansch 5 für die Bodenplatte 3 vorgesehen. Zumindest im Bereich der Schrankrückseite und nach dem Ausführungsbeispiel auch im Bereich der Schrankvorderseite ist ein Niederhalteflansch 6, 6a für die Bodenplatte 3 unter Bildung einer Einschubnut 7, 7a mit dem Auflagerflansch 5 vorgesehen. Der Auflagerflansch 5 und der Niederhalteflansch 6a sind an der Schrankvorderseite von einer lösbar befestigten Profilleiste 8 gebildet. Der Auflagerflansch 5 und der Niederhalteflansch 6 sind im Bereich der Schrankrückseite, der Auflagerflansch 5 auch im Bereich der Schrankseitenwände an das Kabelverzweigergehäuse 1 bzw. den Sockel 2 angeformt. - Die Profilleiste 8 weist ein L-förmiges Oberteil 9 als untere Abschlußleiste für eine vorderseitig in dem Kabelverzweigergehäuse 1 hochschiebbare Frontplatte 10 auf. Der horizontale L-Schenkel 6a des L-förmigen Oberteils 9 bildet den Niederhalteflansch für die Bodenplatte 3. Die Profilleiste 8 ist als Bestandteil eines mit dem Sockel 2 zu verschraubenden Montagerahmens 11 für eine vorderseitig in dem Sockel 2 eingesetzte Verschlußplatte 12 ausgebildet und bildet gleichsam den oberen quer liegenden Rahmenschenkel. Die Bodenplatte 3 weist ein umlaufendes Dichtungsprofil 13 aus, welches nach dem Ausführungsbeispiel als Schlauchprofil ausgebildet ist und eine einwandfreie Abdichtung zwischen Sockelraum und Gehäuseraum gewährleistet. Die Bodenplatte 3 ist als längsgeteilte Bodenplatte ausgeführt, wobei die Längsteilung auf der einen Längsseite der Bodenplatte 3 unter Bildung eines trapezförmigen Bodenteils 14 ausläuft. Zumindest das der Schrankrückseite zugeordnete Bodenteil 14 weist randseitig angeformte Paßstücke 15 zum Einschieben in die zugeordnete Einschubnut 7 auf, deren Nutbreite deutlich größer als die Plattendicke ausgeführt ist. Bei diesen Paßstücken 15 kann es sich um Rippen handeln, die für eine einwandfreie Anlage des Dichtungsprofils gegen den Auflagerflansch 5 sorgen. Der Niederhalteflansch 6 und die Paßstücke bzw. Rippen können auch im Bereich der Schrankseitenwände verwirklicht sein. Die Paßstücke 15 sorgen für einen einwandfreien Sitz der Bodenplatte 3. Das gelingt auf der Schrankvorderseite dadurch, daß sich im Zuge der Herstellung der Profilleiste 8 bzw. des Montagerahmens 11 der Abstand zwischen dem Auflagerflansch 5 und dem Niederhalteflansch 6a derart gering wählen läßt, daß eine an die Plattendicke der Bodenplatte 3 angepaßte Einschubnut 7a erzielt wird, insoweit also zusätzliche Paßstücke nicht erforderlich sind. Die Bodenplatte 3 kann einen umlaufenden Kragen 16 aufweisen, der einerseits eine Schraubverbindung 17 zwischen den beiden Bodennteilen ermöglicht, andererseits eine einwandfreie Fixierung der Bodenplatte 3 zwischen den Niederhalteflanschen 6, 6a gewährleistet. Zwar wird man regelmäßig eine zusätzliche Schraubverbindung 18 für die Bodenplatte 3 vorsehen, jedoch ist eine solche Schraubverbindung wie sie in den Figuren angedeutet ist, nicht zwingend erforderlich. - Im übrigen weist die Bodenplatte 3 in üblicher Weise Montagewangen 19 und Einschubführungen 20 für die Rangierschienen 21 auf, ebenso wie Kabeldurchführungen 22 mit darin eingesetzten Dichtmanschetten 23. Bei der Trennfuge 24 zwischen beiden Bodenteilen handelt es sich um eine Nut/Federverbindung, welche unter Zwischenschaltung eines Dichtungsmittels, z. B. eines Elastomers, zusätzlich abgedichtet sein kann.

## Patentansprüche

1. Kabelverzweigerschrank, mit einem Kabelverzweigergehäuse, einem an dem Kabelverzweigergehäuse angeformten Sockel und einer zwischen dem Kabelverzweigergehäuse und dem Sockel angeordneten Bodenplatte, **dadurch gekennzeichnet**, daß im Übergangsbereich von Kabelverzweigergehäuse (1) und Sockel (2) ein Auflagerflansch (5) für die Bodenplatte (3) vorgesehen ist, daß zumindest im Bereich der Schrankrückseite und/oder Schrankvorderseite ein Niederhalteflansch (6, 6a) für die Bodenplatte (3) unter Bildung jeweils einer Einschubnut (7, 7a) mit dem Auflagerflansch (5) vorgesehen ist, und daß der Auflagerflansch (5) und der Niederhalteflansch (6a) an der Schrankvorderseite von einer lösbar befestigten Profilleiste (8) gebildet sind.

2. Kabelverzweigerschrank nach Anspruch 1, dadurch gekennzeichnet, daß der Auflagerflansch (5) und der Niederhalteflansch (6) im Bereich der Schrankrückseite und der Schrankseitenwände an das Kabelverzweigergehäuse (1) bzw. den Sockel (2) angeformt sind.

3. Kabelverzweigerschrank nach Anspruch 1 oder 2, dadurch gekennzeichnet, daß die Profilleiste (8) ein L-förmiges Oberteil (9) als untere Abschlußleiste für eine vorderseitig in dem Kabelverzweigergehäuse (1) hochschiebbare Frontplatte (10) aufweist.

4. Kabelverzweigerschrank nach einem der Ansprüche 1 bis 3, dadurch gekennzeichnet, daß der horizontale L-Schenkel (6a) des L-förmigen Oberteils (10) den zugeordneten Niederhalteflansch für die Bodenplatte (3) bildet.

5. Kabelverzweigerschrank nach einem der Ansprüche 1 bis 4, dadurch gekennzeichnet, daß die Profilleiste (8) als Bestandteil eines lösbar befestigten Montagerahmens (11) für eine vorderseitig in den Sockel (2) eingesetzte Verschlußplatte (12) ausgebildet ist und den oberen Rahmenschenkel bildet.

6. Kabelverzweigerschrank nach einem der Ansprüche 1 bis 5, dadurch gekennzeichnet, daß die Bodenplatte (3) ein umlaufendes Dichtungsprofil (13), z. B. ein massives Rundprofil oder Schlauchprofil aufweist.

7. Kabelverzweigerschrank mit einer längsgeteilten Bodenplatte, dadurch gekennzeichnet, daß zumindest das der Schrankrückseite zugeordnete Bodenteil (14) randseitig angeformte Paßstücke (15) zum Einschieben in die zugeordnete Einschubnut (7) aufweist, deren Nutbreite größer als die Plattendicke ausgeführt ist.

8. Kabelverzweigerschrank, dessen Bodenplatte einen umlaufenden Kragen aufweist, dadurch gekennzeichnet, daß der Kragen (16) zwischen zumindest den Niederhalteflanschen (6, 6a) auf der Schrankvorderseite und Schrankrückseite eingepaßt ist.
